# FASCICULE DE BREVET EUROPEEN

(11) **EP 3 007 929 B1**
(45) Date de publication et mention de la délivrance du brevet: **28.08.2019**
(21) Numéro de dépôt: 14733242.3
(22) Date de dépôt: 03.06.2014
(51) Int. Cl.: B60N 3/06, B60R 11/06, B60R 7/04

(54) **REPOSE-PIED INTEGRANT DES MOYENS DE RANGEMENT D'UN EQUIPEMENT DE REPARATION DE PNEU**
FUSSSTÜTZE MIT MITTELN ZUR AUFBEWAHRUNG VON REIFENREPARATURAUSRÜSTUNG
FOOTREST INCORPORATING MEANS FOR STORING TYRE REPAIR EQUIPMENT

(30) Priorité: 13.06.2013 FR 1355492
(43) Date de publication de la demande: 20.04.2016
(73) Titulaire: Renault s.a.s, 92100 Boulogne-Billancourt (FR)
(72) Inventeur: BOUILLON, Jean-Charles, F-78940 La Queue Lez Yvelines (FR)
(86) Numéro de dépôt international: PCT/FR2014/051312
(87) Numéro de publication internationale: WO 2014/199047

(56) Documents cités:
- FR-A1- 2 981 310
- JP-A- 2002 127 835
- US-B1- 6 230 949

## Description

L'invention concerne un repose-pied destiné à être implanté entre une partie d'un tablier et un plancher d'un véhicule automobile, comportant une paroi d'appui adaptée pour recevoir le ou les pieds d'un passager du véhicule automobile et en regard d'au moins une partie de laquelle est apte à s'étendre un tapis d'isolation phonique rapporté sur le plancher du véhicule automobile comportant une couche isolante interposée entre le plancher et une couche de revêtement rapportée sur ladite couche isolante, la paroi d'appui comprenant en outre au moins un compartiment de rangement, la paroi d'appui comprenant une face interne destinée à être positionnée en regard d'une face extérieure de la couche de revêtement lors de l'implantation du repose-pied , le compartiment de rangement s'étendant entre ladite face interne de la face d'appui et la face extérieure de la couche de revêtement.

Il est connu du brevet FR-B1-2981310 un repose-pied destiné à être implanté entre une partie d'un tablier et un plancher d'un véhicule automobile, comportant un organe servant d'appui muni d'une face d'appui adaptée pour recevoir le ou les pieds d'un passager du véhicule automobile et en regard d'au moins une partie de laquelle est apte à s'étendre un tapis d'isolation phonique rapporté sur le plancher du véhicule automobile comportant une couche isolante interposée entre le plancher et une couche de revêtement rapportée sur ladite couche isolante, l'organe servant d'appui comprenant en outre au moins un compartiment de rangement d'un équipement d'aide à la réparation de pneus du véhicule, la face d'appui comprenant une face interne destinée à être positionnée en regard d'une face extérieure de la couche de revêtement lors de l'implantation du repose-pied, la face interne étant munie d'organes de liaison conçus pour supporter le compartiment de rangement de sorte que le volume interne du compartiment de rangement s'étende entre la face interne de la face d'appui et la face extérieure de la couche de revêtement. Les organes de liaison sont prévus pour que le compartiment puisse, une fois que le repose-pieds est retiré, pivoter afin que l'on puisse accéder à l'équipement d'aide à la réparation des pneus. Cependant ce dispositif présente des inconvénients.

La partie mobile du compartiment est lourde car elle nécessite une épaisseur et un réseau de nervures importants afin d'être suffisamment rigide pour pouvoir supporter les objets que le compartiment contient sans plier ou sans se casser. De plus les éléments mobiles ont tendance à être plus fragiles à l'usage que des éléments fixes (risque de détérioration des charnières ou des clips de maintien de la partie mobile, par exemple).

En outre, le rangement et le retrait des objets à l'intérieur du compartiment n'est pas aisé, car en fonction des objets déjà présents dans le compartiment, ledit compartiment à tendance à tomber d'un côté ou de l'autre.

Afin de pallier ces inconvénients, l'invention a pour objet un repose pied intégrant un compartiment de rangement d'un équipement d'aide à la réparation de pneus qui soit robuste, léger et pratique.

A cet effet, l'invention propose un repose-pied selon la revendication 1.

Selon d'autres caractéristiques de l'invention:
- Les premiers organes de liaison sont aptes à coopérer avec des orifices complémentaires ménagés dans la paroi de fond du compartiment.
- Les deuxièmes organes de liaison sont des doigts portés par la paroi de fond du compartiment et aptes à coopérer avec des arches portées par la paroi d'appui.
- La paroi de fond comporte au moins un logement moulé selon une forme prédéterminée correspondant à la forme d'au moins un équipement d'aide à la réparation de pneus du véhicule automobile.
- Un premier logement de réception d'un récipient de produit d'étanchéité présentant un corps cylindrique est constitué par au moins une paroi sensiblement perpendiculaire à la paroi de fond dont un bord libre opposé à la paroi de fond se prolonge par une lame flexible présentant un profil en arc de cercle apte à coopérer, en étant maintenue sous contrainte, avec le corps cylindrique du récipient de produit d'étanchéité.
- Le bord de l'extrémité de la lame flexible est relevé de façon à former un moyen de verrouillage apte à coopérer avec le tapis lorsque le repose-pied est en position montée.
- Le premier logement comporte en outre des parois latérales s'étendant sensiblement perpendiculairement à la paroi de fond depuis la première paroi du logement et aptes à coopérer avec des faces d'extrémités du récipient de produit d'étanchéité.
- Un bord libre, opposé à la paroi de fond, des parois latérales du premier logement présentent un retour intérieur élastique apte à être maintenu sous contrainte contre les faces d'extrémité du récipient de produit d'étanchéité.
- Un deuxième logement de réception apte à recevoir un compresseur de forme sensiblement parallélépipédique est délimité par des évidements ménagés dans des plots de sécurité latéraux portés par la paroi de fond aptes à recevoir des coins du compresseur, par des clips arrière ménagés dans la paroi de fond entre les plots de sécurité aptes à coopérer avec une nervure portée par une paroi latérale périphérique du compresseur et des clips latéraux avant aptes à coopérer avec la nervure de la paroi périphérique latérale.
- Un troisième logement de réception d'un anneau de remorquage est constitué par au moins une paire de clips ménagés dans la paroi de fond et se faisant face pour délimiter une première rainure apte à recevoir la tige de l'anneau de remorquage et par deux parois en arcs de cercle concentriques ménagées dans la paroi de fond et délimitant une deuxième rainure apte à recevoir la partie annulaire de l'anneau de remorquage.
- Un quatrième logement de réception d'un crochet d'enjoliveur est constitué par deux clips alignés transversalement ménagés dans la paroi de fond et destinés à recevoir une portion de la tête du crochet et par au moins un autre clip ménagé dans la paroi de fond apte à recevoir la tige du crochet.
- La paroi d'appui comporte à son extrémité supérieure des moyens de fixation amovibles constitués par un goujon soudé sur le tablier et un écrou à ailettes.

D'autres caractéristiques et avantages de l'invention apparaîtront à la lecture de la description d'exemples de réalisation d'un repose-pieds en référence aux dessins annexés dans lesquels :
- La figure 1 est une vue en coupe du repose-pieds en position montée dans le véhicule.
- La figure 2 est une vue de l'intérieur du repose-pieds comportant le compartiment de rangement selon l'invention représenté vide et retourné.
- La figure 3 est une vue du repose-pieds de la figure 2, le compartiment étant représenté plein et retourné.
- La figure 4 est une vue du repose pied des figures 2 et 3, un objet étant en cours d'insertion à l'intérieur étant représenté.
- La figure 5 est une vue en coupe latérale du détail A de la figure 1.
- La figure 6 est une vue en coupe latérale du détail B de la figure 2.

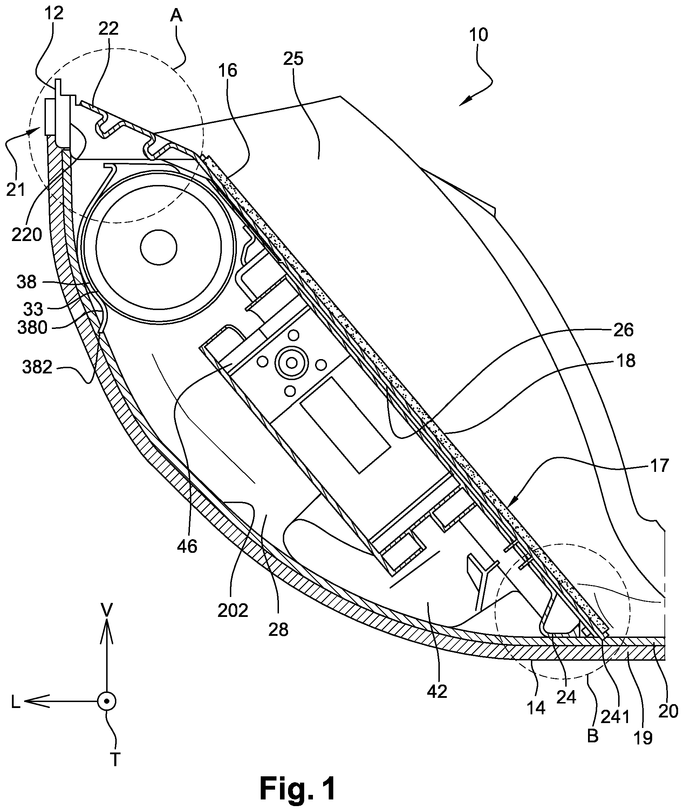

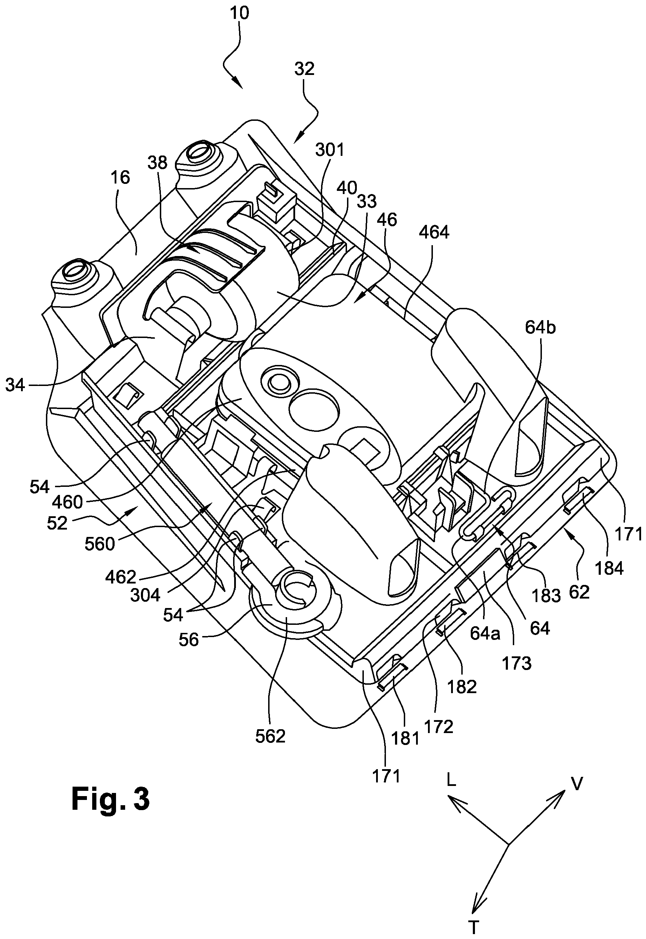

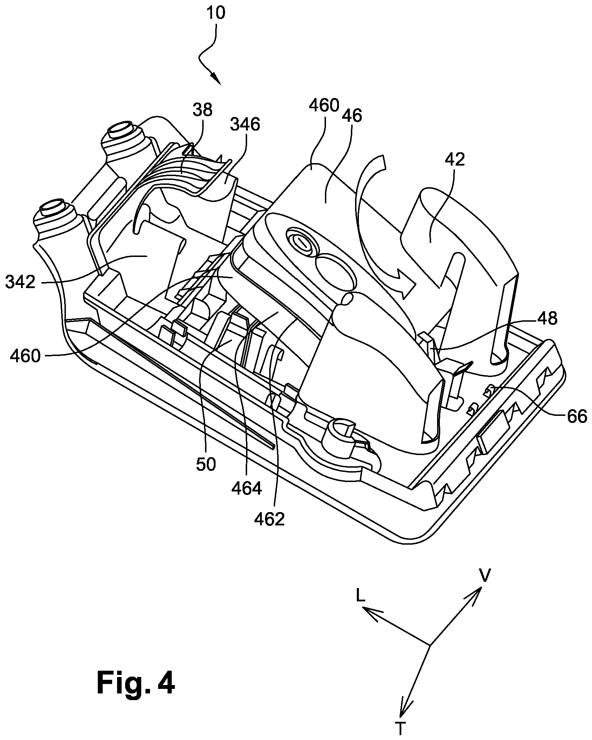

Dans la description qui suit, nous prendrons à titre non limitatif une orientation longitudinale, verticale et transversale indiquée par le trièdre L,V,T des figures 1 à 6.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté à la figure 1, un repose-pied 10 est implanté entre une partie basse 12 d'un tablier et un plancher 14 du véhicule, à l'intérieur de l'habitacle du véhicule, et comporte une paroi d'appui plane 16 rigide et inclinée vers l'avant de façon qu'elle puisse recevoir les pieds d'un occupant du véhicule.

La face externe 17 de la paroi d'appui 16 peut être revêtue d'une couche de revêtement 18 de type textile ou caoutchouc de façon à respecter des contraintes esthétiques ou d'usage.

La face externe 17 de la paroi d'appui 16 peut aussi être tout simplement grainée et présenter des motifs en relief, ce qui permet de réduire les coûts mais également d'obtenir un gain de poids.

Le plancher 14 et la partie basse 12 du tablier sont recouverts quant à eux d'une couche isolante 19 elle-même revêtue d'une couche de revêtement externe 20 de type moquette.

Le repose-pied 10 est en outre destiné à être implanté dans le véhicule en étant disposé directement sur la couche de revêtement 20 couvrant le plancher 14 et la partie basse 12 du tablier et est conçu pour pouvoir être très facilement monté et démonté depuis cette position d'implantation.

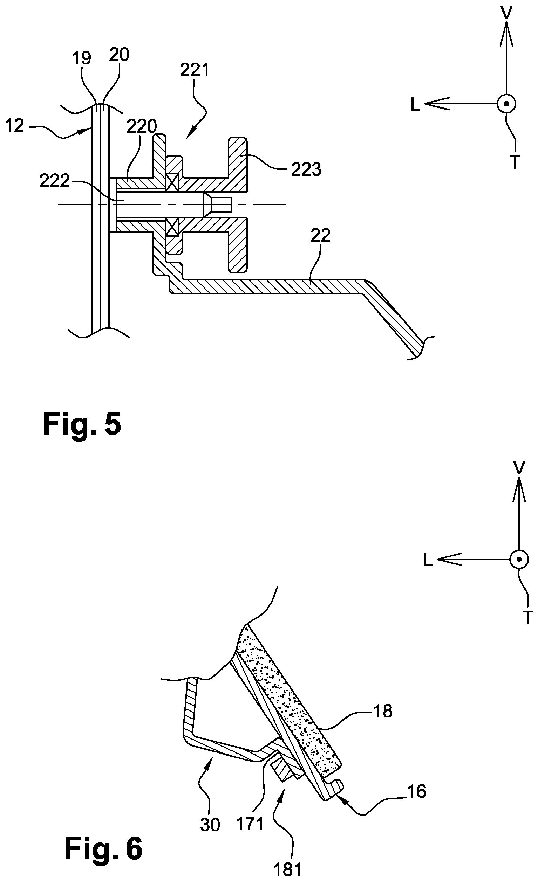

La paroi d'appui rigide 16 est prévue pour être reliée au niveau de son extrémité supérieure 22 et à la partie basse de tablier 12 par au moins une liaison fixe amovible 221. Selon l'exemple de réalisation illustré à la figure 5, la paroi 16 comporte à son extrémité supérieure 22 des ouvertures 220 adaptées pour recevoir les moyens de fixation mécanique amovibles 221 à une partie basse du tablier 12, constitués par des goujons soudés 222 sur la partie basse du tablier 12 qui passent à travers la couche de revêtement 20 et la couche isolante 19 aptes à recevoir un écrou papillon 223. La présence de goujons à ailettes permet au client de procéder aisément au montage et au démontage du repose-pied sans outil.

Tel que représenté à la figure 1, la paroi plane rigide 16 comprend en outre dans son extrémité inférieure 24 une zone d'appui 241 destinée à être positionnée en appui libre par rapport au plancher 14.

La forme de la paroi d'appui rigide 16 est adaptée de sorte que, lorsque le repose-pied est implanté dans l'habitacle comme expliqué précédemment, les bords latéraux 160 de la paroi d'appui 16 épousent intimement d'un côté, le relief du flanc de console centrale (non représenté) du véhicule automobile et, de l'autre côté, le relief du passage de roue 25.

Ainsi implantée entre une partie basse 12 du tablier et le plancher 14 du véhicule, la paroi 16 est disposée de telle manière que la face d'appui externe 17 se présente en étant inclinée vers l'avant du véhicule selon une inclinaison donnée et une face interne 26 de la paroi d'appui 16 est positionnée en regard de la face extérieure 202 de la couche de revêtement 20. Un volume demeure ainsi disponible, qui s'étend entre la face interne 26 de la paroi d'appui 16 du repose-pied et la face extérieure 202 de la couche de revêtement 20.

La paroi d'appui présente des nervures de rigidification RL latérales ainsi que des nervures de rigidifications RC situées dans une zone centrale de la paroi 16.

Des premiers organes de liaison sont prévus pour qu'une paroi de fond 30 d'un compartiment de rangement 28 soit fixée de façon inamovible contre la face interne 26 de la paroi d'appui 16, de sorte que le volume interne du compartiment de rangement 28 s'étend entre la face interne 26 de la paroi d'appui 16 et la face extérieure 202 de la couche de revêtement 20.

Les premiers organes de liaison comprennent des clips indémontables 161, 162, 163, 164, portés par la face interne 26 de la paroi 16 et aptes à coopérer avec des moyens correspondants 301, 302, 303, 304 portés par la paroi de fond 30 du compartiment de rangement 28, pour bloquer de façon indémontable le compartiment de rangement 28 contre la face interne 26 de la paroi d'appui 16.

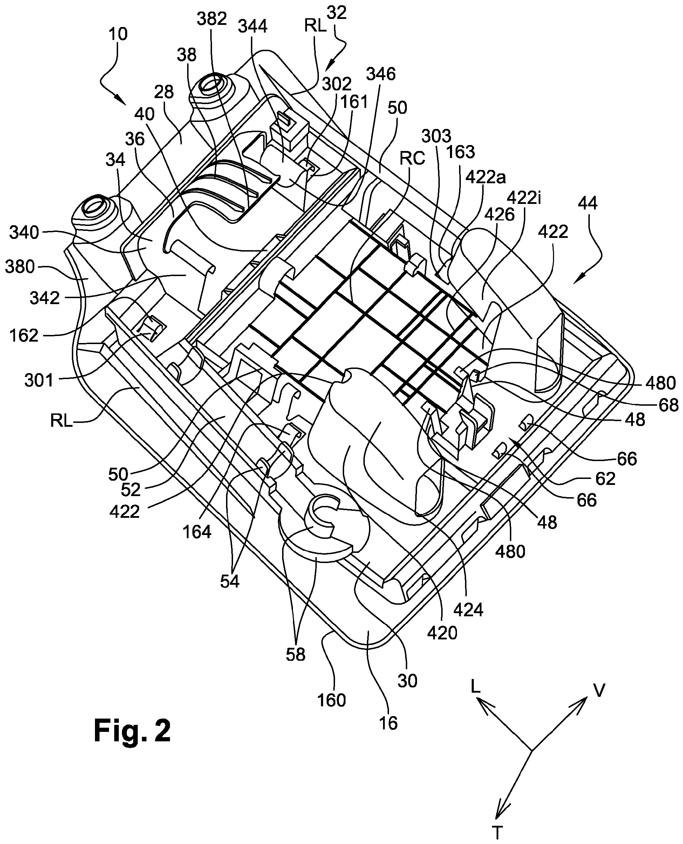

Tel que représenté aux figures 2 et 6, il est également prévu des deuxièmes moyens de liaison qui sont constitués par des doigts 171, 172, 173, 174 portés par un bord inférieur de la paroi 30 et aptes à coopérer avec des arches 181, 182, 183, 184 portées par une partie inférieure de la paroi d'appui 16.

Dans le mode de réalisation décrit, le compartiment de rangement 28 est réalisé de manière rigide par moulage de façon à pouvoir recevoir un équipement d'aide à la réparation de pneus du véhicule automobile. En particulier, le compartiment 28 comprend un premier logement 32 conçu pour recevoir un réservoir tel qu'un récipient de produit d'étanchéité 33, un deuxième logement 44 conçu pour recevoir un compresseur 46, un troisième logement 52 destiné à recevoir un anneau de remorquage et un quatrième logement 62 destiné à recevoir un crochet d'enjoliveur.

Tel que représentée aux figures 1 à 4, le premier logement 32 est situé dans une partie supérieure du compartiment 28 et comporte une première paroi 34 sensiblement perpendiculaire à la paroi de fond 30 dont un bord libre 36 d'orientation sensiblement transversale comporte une lame élastique 38 présentant un profil en arc de cercle apte à coopérer avec le corps cylindrique du récipient 33 de produit d'étanchéité. Les bords latéraux 340 de la première paroi 34 se prolongent latéralement par deux parois 342 sensiblement perpendiculaires à la paroi 16 aptes à coopérer avec des faces d'extrémité 330 du récipient 33. Les parois latérales 342 peuvent comporter au niveau de leur bord libre 344 opposé à la paroi de fond 30 un retour élastique 346 apte à coopérer avec les parois d'extrémité du récipient 33. La lame élastique 38 comporte quant à elle sur son bord libre 380 un retour formant crochet 382, s'étendant dans une direction opposée à la paroi de fond 30. Ainsi, lorsque la paroi d'appui 16 et le compartiment 28 sont disposés à l'intérieur du véhicule, la lame élastique 38 est maintenue sous contrainte contre le revêtement 20 de façon à maintenir le récipient de produit d'étanchéité 33, le retour formant crochet 382 coopérant avec la surface du tapis 20 de façon à assurer un maintien supplémentaire, garantissant la tenue du récipient 33 en cas de température élevée, par exemple. Le crochet 382 présente une seconde fonction d'aide à l'insertion du récipient 33 dans son logement lorsque le compresseur est déjà en place. En outre, la paroi de fond 30 présente en arrière du récipient 33 un muret 40 d'orientation transversale, destiné à limiter les mouvements du récipient 33 vers l'arrière.

Pour insérer le récipient 33 à l'intérieur du premier logement 32, il suffit de la faire glisser à l'encontre de l'élasticité des retours 346 des parois latérales 342 et de la lame élastique 38 qui vont se déformer en glissant le long de la paroi 330 du récipient 33 pour le laisser passer. Une fois le récipient 33 inséré dans le logement 32, la lame 38 et les retours 346 des parois latérales 340 sont en appui sous contrainte contre le récipient 33 et en épousent les contours. Pour retirer le récipient 33, il suffit de tirer sur ce dernier, la lame élastique 38 se déformant alors pour laisser sortir le récipient 33. Une fois le récipient 33 retiré, la lame élastique 38 et les retours 346 reprennent leur forme initiale de repos. L'élasticité des parois 340 et de la lame 38 permettent ainsi d'assurer un montage sans jeu et sans vibrations, tout en assurant un rangement et un retrait faciles.

Tel que représenté aux figures 1 à 4, une partie inférieure du compartiment 28 présente deux plots de compression 42, de forme creuse, comportant une paroi latérale 420 s'étendant depuis la paroi de fond 30 et présentant un profil en forme de U dont l'ouverture est dirigée vers l'arrière du véhicule lorsque le repose pied 10 est en place. La paroi latérale 420 est refermée, au niveau d'un bord 422 opposé à la paroi de fond 30 par une paroi de contact 424 destinée à venir en appui contre le revêtement 20 lorsque la paroi d'appui 16 et le compartiment 28 sont mis en place dans le véhicule. Les plots 42 sont issus de moulage avec le compartiment 28 et sont alignés selon une direction transversale. La paroi de contact 424 est conformée pour épouser intimement la forme du plancher du véhicule lorsque le repose-pied 10 est mis en place dans le véhicule. Ainsi, les parois latérales 420 sont aptes à se déformer et s'écraser sous l'effet d'un choc de façon à en absorber l'énergie pour limiter les risques de blessures aux pieds de l'occupant reposant sur la paroi d'appui 16. Le deuxième logement 44 est destiné à recevoir un compresseur 46 de forme sensiblement parallélépipédique présentant des coins 460 et une paroi latérale périphérique 464 qui comporte une nervure périphérique 462.

Le logement 44 est constitué, à l'arrière, par des évidements 426 ménagés dans la paroi latérale 420 des plots 42, destinés à recevoir deux coins 460 du compresseur 46. Chaque évidement 426 s'étend le long d'une portion avant 422a et une portion intérieure 422i de la paroi latérale 422 des plots 42. On entend par portion intérieure 422i de la paroi latérale 422, une partie de la paroi 422 se trouvant en regard du plot de compression 42 voisin. Les deux coins 460 du compresseur 46 sont donc maintenus entre la paroi de fond 30 et les bords des évidements 426. Le deuxième logement 44 comporte également deux clips arrière 48 alignés selon une direction transversale entre les plots de compression 42, sensiblement au niveau d'un bord vertical 428 des évidements 426. Les deux clips arrière 48 prennent la forme de pattes s'étendant sensiblement perpendiculairement depuis la paroi de fond 30 et comportant à leur extrémité un crochet 480 apte à coopérer avec la nervure 462 située sur la paroi latérale périphérique 464 du compresseur 46. A l'avant, le deuxième logement 44 comporte deux clips latéraux 50 aptes à coopérer avec la paroi périphérique 464 du compresseur 46. Les clips 50 prennent ici la forme de pattes élastiques présentant un crochet 500 apte à coopérer avec la nervure 462. En outre, le muret 40 d'orientation transversale décrit précédemment forme une butée susceptible de limiter un mouvement du compresseur 46 vers l'avant.

Le deuxième logement 44 est donc délimité par les évidements arrière 426, les clips arrière 48, les clips avant latéraux 50 et le muret 40.

Par ailleurs, les nervures de rigidification centrales RC sont localisées au niveau du deuxième logement 44, sur la face interne 26 de la paroi d'appui 16. Pour insérer le compresseur 46 à l'intérieur du deuxième logement 44, il suffit de glisser les coins 460 dans les évidements 426 et la nervure 462 de la paroi latérale 464 sous les crochets 480 des clips arrière 48 en maintenant obliquement le compresseur 46 puis d'imprimer au compresseur 46 une rotation en direction de la paroi de fond 30 autour des coins 460 déjà insérés de façon à introduire le reste du compresseur 46 dans la partie avant du logement 44 entre les deux clips 50. Pendant l'insertion du compresseur 46, les clips avant latéraux 50 se déforment élastiquement jusqu'à ce que les crochets 500 coopèrent avec la nervure 462 de la paroi latérale 464. Pour procéder au retrait du compresseur 46, les étapes sont effectuées en sens inverse en relevant, à l'avant, les coins 460 du compresseur 46 pour dégager la nervure 462 des clips latéraux avant 50 puis de tirer le compresseur 46 en le maintenant obliquement pour faire sortir, à l'arrière du logement 44, les coins 460 des évidements 426 et dégager la nervure 462 des clips arrière 48.

Le troisième logement 52 est destiné à recevoir un anneau de remorquage 56 présentant une tige 560 et une tête annulaire 562. Il est disposé le long d'un bord latéral 160 de la paroi de fond 30 et est formé par au moins une paire de parois élastiques 54 sensiblement perpendiculaires à la paroi de fond 30, se faisant face et situées à une distance l'une de l'autre correspondant au diamètre de la tige 560 de l'anneau de remorquage 56. Dans le mode de réalisation décrit ici, le troisième logement 52 présente deux paires de parois 54. Le troisième logement 52 comporte en outre une autre paire de parois 58 disposés en arc de cercle et de manière concentrique de façon à délimiter la forme de la tête 562 de l'anneau de remorquage 56. Les différentes paires de paroi 54,58 présentent une élasticité suffisante pour permettre l'insertion de l'anneau de remorquage 56 par un simple appui selon une direction sensiblement perpendiculaire à la paroi de fond 30. Le maintien de l'anneau de remorquage 56 est ensuite assuré par l'appui sous contrainte effectué par les parois élastiques 54,58 sur l'anneau de remorquage 56. Par ailleurs, la paroi de fond 30 peut aussi comporter une empreinte 60 sensiblement semi cylindrique présentant la forme de la tige 560 de l'anneau de remorquage 56. Pour retirer l'anneau de remorquage 56 de son logement 52, il suffit alors d'exercer une traction selon une direction perpendiculaire à la paroi de fond 30. Les parois 54, 58 se déforment alors pour laisser passage à l'anneau de remorquage 56 puis reprennent leur forme initiale.

Le quatrième logement 62, destiné à recevoir un crochet d'enjoliveur 64 est, situé entre les cônes 42. Le crochet d'enjoliveur 64 présente la forme d'un fil métallique rigide dont une extrémité 64a, la tête 64, est recourbée de façon à former une boucle et l'autre extrémité 64b est rectiligne de façon à former une tige. Le quatrième logement 62 est constitué par une paire de clips 66 ménagés dans la paroi de fond 30 et alignés selon une direction transversale et un second clip 68 situé en avant des clips 66. Les clips 66 sont aptes à recevoir un bord d'extrémité 64c de la tête 64a du crochet d'enjoliveur 64, tandis que le clip 68 est apte à recevoir la tige 64b du crochet 64. Pour ranger le crochet 64 dans son logement 62 il suffit alors d'introduire le bord d'extrémité 64c de la tête 64a du crochet en maintenant le crochet 64 incliné puis faire pivoter le crochet 64 en direction de la paroi de fond 30 du logement 28 jusqu'à ce que le clip 68 reçoive la tige 64b du crochet 64. Pour retirer le crochet 64, il suffit d'opérer en sens inverse en tirant sur la tige 64b en faisant pivoter le crochet autour du bord d'extrémité 64c puis de tirer sur le crochet pour le dégager des clips 68.

Ainsi, l'accès au compartiment de rangement 28 intégré au repose-pied 10 selon l'invention est rendu très aisé, dans la mesure où il suffit simplement de démonter les moyens de fixation mécanique amovibles reliant le repose-pied 10 à une partie du tablier pour pouvoir avoir accès à l'arrière du repose-pied 10 où se trouve logé le compartiment de rangement 28, sans qu'il soit nécessaire de manipuler la plaque 16 revêtue de moquette 20. Il suffit alors de retourner le repose-pied 10 et de le poser par exemple sur l'assise du siège passager pour avoir accès à son contenu. L'accès au compartiment ne nécessite donc que peu de manipulations.

De plus, ce nouvel assemblage de type indémontable entre la plaque 16 et le compartiment de rangement 28 confère à l'ensemble une meilleure stabilité en statique, ce qui donne un sentiment de solidité au client lorsqu'il contrôle la qualité de l'ensemble en appuyant dessus avec ses pieds. En outre, cette impression de robustesse est couplée à un gain de poids significatif d'environ 25%.

## Revendications

1. Repose-pied (10) destiné à être implanté entre une partie (12) d'un tablier et un plancher (14) d'un véhicule automobile, comportant une paroi d'appui (16) adaptée pour recevoir le ou les pieds d'un passager du véhicule automobile et en regard d'au moins une partie de laquelle est apte à s'étendre un tapis d'isolation phonique rapporté sur le plancher (14) du véhicule automobile comportant une couche isolante (19) interposée entre le plancher (14) et une couche de revêtement (20) rapportée sur ladite couche isolante (19), la paroi d'appui (16) comprenant en outre au moins un compartiment de rangement (28), la paroi d'appui (16) comprenant une face interne (26) destinée à être positionnée en regard d'une face extérieure (202) de la couche de revêtement (20) lors de l'implantation du repose-pied (10), le compartiment de rangement (28) s'étendant entre ladite face interne (26) de la face d'appui (16) et la face extérieure (202) de la couche de revêtement (20), **caractérisé en ce que** le compartiment de rangement (28) présente une paroi de fond (30) fixée de façon permanente et inamovible sur la face interne (26) de la paroi d'appui (16) par des premiers (161 à 164), (301 à 304) et des deuxièmes (171 à 174), (181 à 184) organes de liaison et comportant des logements (32, 44, 52, 62) dont le contenu est directement accessible sans démontage du compartiment de rangement (28), les premiers organes de liaison (161 à 164), (301 à 304) étant des clips indémontables (161 à 164) portés par la face interne (26) de la paroi d'appui (16) et aptes à coopérer avec des moyens complémentaires (301 à 304) ménagés dans la paroi de fond (30) du compartiment (28).

2. Repose-pied (10) selon la revendication 1, **caractérisé en ce que** les organes de liaison (171 à 174), (181 à 184) sont des doigts (171 à 174) portés par la paroi de fond (30) du compartiment (28) et aptes à coopérer avec des arches (181 à 184) portées par la paroi (16).

3. Repose-pied (10) selon l'une des revendications 1 ou 2, **caractérisé en ce que** la paroi de fond (30) comporte au moins un logement moulé (32, 44, 52, 62) selon une forme prédéterminée correspondant à la forme d'au moins un équipement (33, 46, 56, 64) d'aide à la réparation de pneus du véhicule automobile.

4. Repose-pied (10) selon la revendication 3, **caractérisé en ce qu'**un premier logement (32) de réception d'un récipient de produit d'étanchéité (33) présentant un corps cylindrique est constitué par au moins une paroi (34) sensiblement perpendiculaire à la paroi de fond (30) dont un bord libre (340) opposé à la paroi de fond (30) se prolonge par une lame flexible (38) présentant un profil en arc de cercle apte à coopérer, en étant maintenue sous contrainte, avec le corps cylindrique du récipient de produit d'étanchéité (33).

5. Repose-pied (10) selon la revendication 4, **caractérisé en ce qu'**un bord libre (380) de la lame flexible (38) est relevé de façon à former un moyen de verrouillage (382) apte à coopérer avec le revêtement (20) lorsque le repose-pied (10) est en position d'utilisation.

6. Repose-pied (10) selon l'une des revendications 3 à 5, **caractérisé en ce que** le premier logement (32) comporte en outre des parois latérales (342) s'étendant sensiblement perpendiculairement à la paroi de fond (30) depuis la première paroi (34) du logement (32) et aptes à coopérer avec des faces d'extrémités du récipient de produit d'étanchéité (33).

7. Repose-pied (10) selon la revendication 6, **caractérisé en ce qu'**un bord libre (344), opposé à la paroi de fond (30), des parois latérales (342) du premier logement (32) présentent un retour intérieur élastique (346) apte à être maintenu sous contrainte contre les faces d'extrémité du récipient de produit d'étanchéité (33).

8. Repose-pied (10) selon l'une des revendications 3 à 7, **caractérisé en ce qu'**un deuxième logement (44) apte à recevoir un compresseur (46) de forme sensiblement parallélépipédique est délimité par des évidements (420) ménagés dans des plots de sécurité latéraux (42) portés par la paroi de fond (30) aptes à recevoir deux coins (460) du compresseur (46), par des clips arrière (48) ménagés dans la paroi de fond (30) entre les plots de sécurité (42) aptes à coopérer avec une nervure (462) portée par une paroi latérale périphérique (464) du compresseur (46) et des clips latéraux avant (50) aptes à coopérer avec la nervure (462) de la paroi périphérique latérale (462).

9. Repose-pied (10) selon l'une des revendications 3 à 8, **caractérisé en ce qu'**un troisième logement de réception (52) d'un anneau de remorquage (56) est constitué par au moins une paire de clips (54) ménagés dans la paroi de fond (30) et se faisant face pour délimiter une première rainure apte à recevoir la tige (560) de l'anneau de remorquage (56) et par deux parois (58) en arcs de cercle concentriques ménagées dans la paroi de fond (30) et délimitant une deuxième rainure apte à recevoir la partie annulaire (562) de l'anneau de remorquage (56).

10. Repose-pied (10) selon l'une des revendications 3 à 9, **caractérisé en ce qu'**un quatrième logement de réception (62) d'un crochet d'enjoliveur (64) est constitué par deux clips (66) alignés transversalement ménagés dans la paroi de fond (30) et destinés à recevoir une portion de la tête (64a) du crochet (64) et par au moins un autre clip (68) ménagé dans la paroi de fond (30) apte à recevoir la tige (64b) du crochet (64).

11. Repose-pied (10) selon l'une quelconque des revendications 1 à 10, **caractérisé en ce que** la paroi d'appui (16) comporte à son extrémité supérieure (22) des moyens de fixation amovibles (221) constitués par un goujon (222) soudé sur le tablier (12) et un écrou à ailettes (223).

## Patentansprüche

1. Fußstütze (10), welche dazu bestimmt ist, zwischen einem Teil (12) einer Spritzwand (14) und einem Boden (14) eines Kraftfahrzeugs eingebaut zu werden, und eine Stützwand (16) aufweist, die dafür ausgelegt ist, den Fuß oder die Füße eines Beifahrers des Kraftfahrzeugs aufzunehmen, und wobei sich gegenüber wenigstens einem Teil derselben eine auf dem Boden (14) des Kraftfahrzeugs angebrachte Schalldämmmatte erstrecken kann, die eine Isolierschicht (19) aufweist, die zwischen dem Boden (14) und einer auf der Isolierschicht (19) angebrachten Überzugsschicht (20) angeordnet ist, wobei die Stützwand (16) außerdem wenigstens ein Ablagefach (28) umfasst, wobei die Stützwand (16) eine Innenseite (26) umfasst, die dazu bestimmt ist, beim Einbau der Fußstütze (10) gegenüber einer Außenseite (202) der Überzugsschicht (20) positioniert zu werden, wobei sich das Ablagefach (28) zwischen der Innenseite (26) der Stützwand (16) und der Außenseite (202) der Überzugsschicht (20) erstreckt, **dadurch gekennzeichnet, dass** das Ablagefach (28) eine Rückwand (30) aufweist, die durch erste (161 bis 164), (301 bis 304) und zweite (171 bis 174), (181 bis 184) Verbindungsorgane dauerhaft und unlösbar an der Innenseite (26) der Stützwand (16) befestigt ist und Aufnahmen (32, 44, 52, 62) aufweist, deren Inhalt unmittelbar ohne Ausbau des Ablagefaches (28) zugänglich ist, wobei die ersten Verbindungsorgane (161 bis 164), (301 bis 304) nicht lösbare Clips (161 bis 164) sind, die von der Innenseite (26) der Stützwand (16) getragen werden und geeignet sind, mit komplementären Mitteln (301 bis 304) zusammenzuwirken, die in der Rückwand (30) des Faches (28) ausgebildet sind.

2. Fußstütze (10) nach Anspruch 1, **dadurch gekennzeichnet, dass** die Verbindungsorgane (171 bis 174), (181 bis 184) Finger (171 bis 174) sind, die von der Rückwand (30) des Faches (28) getragen werden und geeignet sind, mit Bögen (181 bis 184) zusammenzuwirken, die von der Wand (16) getragen werden.

3. Fußstütze (10) nach einem der Ansprüche 1 oder 2, **dadurch gekennzeichnet, dass** die Rückwand (30) wenigstens eine Aufnahme (32, 44, 52, 62) aufweist, die gemäß einer vorbestimmten Form geformt ist, die der Form wenigstens eines Hilfsmittels (33, 46, 56, 64) für die Reparatur von Reifen des Kraftfahrzeugs entspricht.

4. Fußstütze (10) nach Anspruch 3, **dadurch gekennzeichnet, dass** eine erste Aufnahme (32) zum Aufnehmen eines Dichtungsmittelbehälters (33), der einen zylindrischen Körper aufweist, aus wenigstens einer zur Rückwand (30) im Wesentlichen senkrechten Wand (34) besteht, von der ein der Rückwand (30) gegenüberliegender freier Rand (340) durch eine ein kreisbogenförmiges Profil aufweisende flexible Zunge (38) verlängert ist, die geeignet ist, indem sie unter Spannung gehalten wird, mit dem zylindrischen Körper des Dichtungsmittelbehälters (33) zusammenzuwirken.

5. Fußstütze (10) nach Anspruch 4, **dadurch gekennzeichnet, dass** ein freier Rand (380) der flexiblen Zunge (38) hochstehend ist, so dass er ein Verriegelungsmittel (382) bildet, das geeignet ist, mit dem Überzug (20) zusammenzuwirken, wenn sich die Fußstütze (10) in der Verwendungsposition befindet.

6. Fußstütze (10) nach einem der Ansprüche 3 bis 5, **dadurch gekennzeichnet, dass** die erste Aufnahme (32) außerdem Seitenwände (342) aufweist, die sich von der ersten Wand (34) der Aufnahme (32) aus im Wesentlichen senkrecht zur Rückwand (30) erstrecken und geeignet sind, mit Stirnflächen des Dichtungsmittelbehälters (33) zusammenzuwirken.

7. Fußstütze (10) nach Anspruch 6, **dadurch gekennzeichnet, dass** ein der Rückwand (30) gegenüberliegender freier Rand (344) der Seitenwände (342) der ersten Aufnahme (32) einen elastischen nach innen zurückgekrümmten Abschnitt (346) aufweist, der geeignet ist, unter Spannung an den Stirnflächen des Dichtungsmittelbehälters (33) anliegend gehalten zu werden.

8. Fußstütze (10) nach einem der Ansprüche 3 bis 7, **dadurch gekennzeichnet, dass** eine zweite Aufnahme (44), die geeignet ist, einen Kompressor (46) von im Wesentlichen quaderförmiger Form aufzunehmen, von Vertiefungen (420) begrenzt wird, die in von der Rückwand (30) getragenen seitlichen Sicherungsblöcken (42) ausgebildet sind, die geeignet sind, zwei Ecken (460) des Kompressors (46) durch in der Rückwand (30) zwischen den Sicherungsblöcken (42) ausgebildete hintere Clips (48), die geeignet sind, mit einer von einer seitlichen Umfangswand (464) des Kompressors (46) getragenen Rippe (462) zusammenzuwirken, und vordere seitliche Clips (50), die geeignet sind, mit der Rippe (462) der seitlichen Umfangswand (462) zusammenzuwirken, aufzunehmen.

9. Fußstütze (10) nach einem der Ansprüche 3 bis 8, **dadurch gekennzeichnet, dass** eine dritte Aufnahme (52) zum Aufnehmen einer Abschleppöse (56) aus wenigstens einem Paar Clips (54) besteht, die in der Rückwand (30) ausgebildet sind und einander zugewandt sind, um eine erste Nut zu begrenzen, die geeignet ist, die Stange (560) der Abschleppöse (56) aufzunehmen, und aus zwei konzentrischen kreisbogenförmigen Wänden (58), die in der Rückwand (30) ausgebildet sind und eine zweite Nut begrenzen, die geeignet ist, den ringförmigen Teil (562) der Abschleppöse (56) aufzunehmen.

10. Fußstütze (10) nach einem der Ansprüche 3 bis 9, **dadurch gekennzeichnet, dass** eine vierte Aufnahme (62) zum Aufnehmen eines Hakens zur Radkappen-Demontage (64) aus zwei in Querrichtung zueinander ausgerichteten Clips (66) besteht, die in der Rückwand (30) ausgebildet sind und dazu bestimmt sind, einen Abschnitt des Kopfstücks (64a) des Hakens (64) aufzunehmen, und aus wenigstens einem weiteren Clip (68), der in der Rückwand (30) ausgebildet ist und geeignet ist, den Schaft (64b) des Hakens (64) aufzunehmen.

11. Fußstütze (10) nach einem der Ansprüche 1 bis 10, **dadurch gekennzeichnet, dass** die Stützwand (16) an ihrem oberen Ende (22) lösbare Befestigungsmittel (221) aufweist, die aus einem an die Spritzwand (12) angeschweißten Bolzen (222) und einer Flügelmutter (223) bestehen.

## Claims

1. Footrest (10) designed to be installed between a part (12) of a bulkhead and a floor (14) of a motor vehicle, comprising a bearing wall (16) designed to receive the foot or feet of a passenger of the motor vehicle and opposite at least one part of which there is capable of extending a sound insulation mat attached to the floor (14) of the motor vehicle comprising an insulating layer (19) interposed between the floor (14) and a covering layer (20) attached to said insulating layer (19), the bearing wall (16) further comprising at least one storage compartment (28), the bearing wall (16) comprising an internal face (26) designed to be positioned opposite an external face (202) of the covering layer (20) during the installation of the footrest (10) and the storage compartment (28) extending between said internal face (26) of the bearing face (16) and the external face (202) of the covering layer (20), **characterized in that** the storage compartment (28) has a bottom wall (30) fixed permanently and non removably to the internal face (26) of the bearing wall (16) by first (161 to 164), (301 to 304) and second (171 to 174), (181 to 184) connecting members and comprising housings (32, 44, 52, 62), the contents thereof being directly accessible without dismantling the storage compartment (28), the first connecting members (161 to 164), (301 to 304) being fixed clips (161 to 164) borne by the internal face (26) of the bearing wall (16) and capable of cooperating with complementary means (301 to 304) formed in the bottom wall (30) of the compartment (28).

2. Footrest (10) according to Claim 1, **characterized in that** the connecting members (171 to 174), (181 to 184) are fingers (171 to 174) borne by the bottom wall (30) of the compartment (28) and capable of cooperating with arcuate portions (181 to 184) borne by the wall (16).

3. Footrest (10) according to either of Claims 1 and 2, **characterized in that** the bottom wall (30) comprises at least one housing (32, 44, 52, 62) moulded according to a predetermined shape, corresponding to the shape of at least one piece of equipment (33, 46, 56, 64) used for the repair of tyres of the motor vehicle.

4. Footrest (10) according to Claim 3, **characterized in that** a first housing (32) for receiving a container for a sealing product (33) having a cylindrical body consists of at least one wall (34) substantially perpendicular to the bottom wall (30), one free edge (340) thereof opposing the bottom wall (30) being extended by a flexible blade (38) having a circular-arc-shaped profile capable of cooperating with the cylindrical body of the container for the sealing product (33), by being held under tension.

5. Footrest (10) according to Claim 4, **characterized in that** a free edge (380) of the flexible blade (38) is raised so as to form a locking means (382) capable of cooperating with the covering (20) when the footrest (10) is in the position of use.

6. Footrest (10) according to one of Claims 3 to 5, **characterized in that** the first housing (32) further comprises lateral walls (342) extending substantially perpendicular to the bottom wall (30) from the first wall (34) of the housing (32) and capable of cooperating with end faces of the container for the sealing product (33).

7. Footrest (10) according to Claim 6, **characterized in that** a free edge (344), opposing the bottom wall (30), of the lateral walls (342) of the first housing (32) have a resilient internal folded-over portion (346) capable of being held under tension against the end faces of the container for the sealing product (33).

8. Footrest (10) according to one of Claims 3 to 7, **characterized in that** a second housing (44) capable of receiving a compressor (46) of substantially parallelepipedal shape is delimited by recesses (420) formed in lateral safety blocks (42) borne by the bottom wall (30) and capable of receiving two corners (460) of the compressor (46) via rear clips (48) which are formed in the bottom wall (30) between the safety blocks (42) and which are capable of cooperating with a rib (462) borne by a peripheral lateral wall (464) of the compressor (46) and front lateral clips (50) capable of cooperating with the rib (462) of the lateral peripheral wall (462).

9. Footrest (10) according to one of Claims 3 to 8, **characterized in that** a third housing for receiving (52) a towing ring (56) consists of at least one pair of clips (54) formed in the bottom wall (30) and opposing one another to delimit a first groove capable of receiving the shank (560) of the towing ring (56) and two concentric circular-arc-shaped walls (58) formed in the bottom wall (30) and delimiting a second groove capable of receiving the annular part (562) of the towing ring (56).

10. Footrest (10) according to one of Claims 3 to 9, **characterized in that** a fourth housing for receiving (62) a hub cap hook (64) consists of two clips (66) aligned transversely and formed in the bottom wall (30), designed to receive a portion of the head (64a) of the hook (64), and at least one further clip (68) formed in the bottom wall (30) and capable of receiving the shank (64b) of the hook (64).

11. Footrest (10) according to any one of Claims 1 to 10, **characterized in that** the bearing wall (16) comprises at its upper end (22) removable fixing means (221) consisting of a pin (222) welded to the bulkhead (12) and a butterfly nut (223).
